# EUROPÄISCHE PATENTSCHRIFT

(11) **EP 2 258 496 B1**
(45) Veröffentlichungstag und Bekanntmachung des Hinweises auf die Patenterteilung: **25.01.2012**
(21) Anmeldenummer: 09007353.7
(22) Anmeldetag: 03.06.2009
(51) Int. Cl.: B21D 55/00, B30B 15/28

(54) **Vorrichtung und Verfahren zum Verhindern des Bruchs eines Werkzeugs beim Feinschneiden und/oder Umformen eines Werkstücks**
Device and method for preventing a tool from breaking during fine cutting and/or reforming a work piece
Dispositif et procédé destinés à empêcher la rupture d'un outil lors du coupage fin et/ou du déformage d'une pièce usinée

(43) Veröffentlichungstag der Anmeldung: 08.12.2010
(73) Patentinhaber: Feintool Intellectual Property AG, 3250 Lyss (CH)
(72) Erfinder: Schaltegger, Markus, Dipl.-Ing., 3033 Wohlen bei Bern (CH); Cristofaro, Alfio, M-Ing., 8864 Reichenburg (CH); Ochsenbein, Jürg, M-Ing., 3172 Niederwanden bei Bern (CH)
(74) Vertreter: Hannig, Wolf-Dieter

(56) Entgegenhaltungen:
- GB-A- 1 128 285
- GB-A- 1 308 641
- JP-B- 49 037 228
- JP-U- 48 089 073

## Beschreibung

Die Erfindung betrifft eine Vorrichtung zum Verhindern des Bruchs eines aus einem Ober- und Unterteil zusammengesetzten Werkzeugs beim Feinschneiden und/oder Umformen in einer Presse mit einem oberhalb eines eine Hubbewegung ausführenden Stößel angeordneten Feinschneidkopfes, der ein Hauptzylinder umfasst, in dem ein auf der Hubachse liegender Ringzackenkolben und mehrere koaxial zur Hubachse angeordnete Ringzackenbolzen aufgenommen sind, die in einer den Hauptzylinder verschließenden Hauptplatte axial geführt sind und sich auf einer Ringzackendruckplatte abstützen, wobei der Hauptzylinder im Kopfstück der Presse gehalten und durch einen Ringzackendeckel verschlossen ist, und wobei der Feinschneidkopf mit einem Hydrauliksystem zum Erzeugen von auf die Werkzeugteile wirkende Drücke über durch einen Rechner ansteuerbare Ventile in Verbindung steht.

Die Erfindung betrifft des Weiteren ein Verfahren zum Verhindern des Bruchs eines aus einem Ober- und Teil eines Werkzeugs beim Feinschneiden und/oder Umformen in einer Presse, bei dem die im Hauptzylinder des Feinschneidkopfes geführten Ringzackenkolben und Tastkolben zum Aufbringen einer Ringzackenkraft und Abstreifkraft mit einem regelbaren Druck aus einem Hydrauliksystem beaufschlagt werden, wobei die einzelnen Drücke für die Kolben über durch einen Rechner angesteuerte Ventile eingestellt werden.

### Stand der Technik

Aus der DE 24 19 390 C2 ist eine Vorrichtung zum Schutz eines Werkzeugsatzes einer hydraulischen Feinstanzpresse bekannt, deren Stößel mit Schnellhub-Zylinder-Kolben-Einheiten und einer Arbeitshub-Druckeinheit anhebbar ist, bei welcher Presse zwischen Stößelantriebselement und einem getriebenen Stößelteil ein bei Annäherung durch ein Druckmittel mit geringer Kraft aufrecht erhaltbarer, bei größerer Druckbelastung der ihn bildenden Teile sich schließender Tastspalt besteht, dessen Zustand von einem Taster und durch einen Wegschalter solange überwachbar ist, bis der Stößel die Werkzeuge einander bis zum ordnungsgemäßen Beginn des Arbeitshubes genähert hat. Der Tastspalt ist zwischen dem Stößel und den Stirnflächen der Kolbenstangen der Schnellhub-Kolben gebildet und die Druckmittelbeaufschlagung für den Tastspalt in Tastzylindern in dem Stößel erfolgt, deren Tastkolben jeweils gegen eine Teilfläche der vorgenannten Stirnflächen anliegen.
Bei dieser bekannten Schutzvorrichtung ist der Tastspalt vor der Schnellhub-Zylinder-Kolben-Einheit dem Stößel zugeordnet und diesem vorgeschaltet. Ein Ansprechen dieser Schutzvorrichtung erfolgt immer dann, wenn der Tastspalt sich infolge einer erhöhten Druckbelastung schließt.
Sie hat den Nachteil, dass Stanzabfälle, Teile oder Fremdkörper im Werkzeug nicht erfasst werden und somit Schäden im Werkzeug nicht verhindert werden können.

Eine andere bekannte Lösung (DE 69 17 177 U) für eine Werkzeugsicherung an Pressen zur Verarbeitung eines Rohlings offenbart zwischen einem ersten durch den Arbeitskolben bewegten Werkzeug und einem ständerfesten Werkzeug zwei in vorbestimmter Reihenfolge zu betätigende Schalter zur Unterbrechung des Arbeitshubes bei umgekehrter Betätigungsfolge. Es ist ein zum Anbringen des ersten Werkzeugs dienendes Organ axial verschiebbar in Bezug auf den Arbeitskolben vorgesehen, das beim Arbeitshub durch elastisch nachgiebige Mittel in einem kleinen Abstand vor dem Arbeitskolben gehalten wird. Ein erster auf die Sollhöhe des zu verarbeitenden Rohlings einstellbarer Endschalter wird durch einen Anschlag betätigt, wenn der Kolben einen durch die Einstellung des ersten Endschalters vorbestimmten Teil seines Arbeitshubes zurückgelegt hat. Ein zweiter Endschalter wird durch einen weiteren Anschlag betätigt, wenn das Organ durch Auftreffen des Rohlings oder eines Fremdkörpers auf das zweite Werkzeug um den kleinen Abstand auf den Kolben zurückgedrängt worden ist.
Das Organ ist als ein unterer Werkzeug-Aufspanntisch ausgeführt, der auf einem Zylinder ruht, der mit dem Arbeitskolben eine ringförmige Druckkammer einschließt, die an eine Druckmittelleitung angeschlossen ist, in deren Zuge sich ein Absperrorgan befindet, das gestattet, so viel Druckluft in die Ringkammer einzulassen, dass der Tisch sich beim Arbeitshub praktisch schwebend vor dem Kolben befindet. Bei dieser bekannten Lösung ist von Nachteil, dass neben dem hydraulischen System ein zweites separates System notwendig ist, das mit Druckluft arbeitet und somit einen erheblichen Schaltungs- und Konstruktionsaufwand nach sich zieht. Außerdem verbleibt nach der Erfassung eines Fremdkörpers keine Möglichkeit, die kinetische Energie des Antriebs abzubauen.

Andere bekannte Lösung setzen zur Erfassung von Stanzbutzen oder anderen Fremdkörpern im Werkzeug optische Sensoren oder Ultraschallsensoren ein.

### Aufgabenstellung

Bei diesem Stand der Technik liegt der Erfindung die Aufgabe zugrunde, eine Lösung zum Verhindern des Bruchs eines Werkzeuges beim Feinschneiden und/oder Umformen eines Werkstücks zu schaffen, die bei Vereinfachung des Aufbaus und der Verringerung der Teileanzahl unter gleichzeitiger Kostenreduzierung geeignet ist, hohe Kippmomente aufzunehmen und die kinetische Energie des Antriebs während eines Leerhubs noch vor der Abschaltung der Presse abzubauen.

Diese Aufgabe wird durch eine Vorrichtung der eingangs genannten Art mit den Merkmalen des Anspruchs 1 und durch ein Verfahren mit den Merkmalen des Anspruchs 14 gelöst.

Vorteilhafte Ausgestaltungen der erfindungsgemäßen Vorrichtung und des Verfahrens sind den Unteransprüchen entnehmbar

Die erfindungsgemäßen Lösung geht von der Erkenntnis aus, die Funktion für die Erfassung von Stanzabfällen, Teilen oder anderen Fremdkörpern in die Aktivelemente des Feinschneidkopfes zu integrieren, d.h. zwischen Ringzackenkolben und Ringzackenbolzen einen Tastkolben vorzusehen, der mit dem Ringzackenkolben einerseits und mit Ringzackenbolzen und Ringzackendruckplatte andererseits eine axial zueinander verschiebbare Anordnung bildet, wobei dem Ringzackenkolben ein mit einem Vorspanndruck des Hydrauliksystems beaufschlagbarer Druckraum, zwischen Ringzackenkolben und Tastkolben ein mit einem Tastkolbendruck beaufschlagbarer Druckraum sowie dem Tastkolben ein weiterer mit einem Differenzialdruck beaufschlagbarer Druckraum zugeordnet sind, von denen die Druckräume über je einen Anschluss im Ringzackendeckel und die Druckräume jeweils über separate im Hauptzylinder angeordnete Kanäle mit dem Hydrauliksystem zur Beaufschlagung des Ringzackenkolbens und des Tastkolbens entgegen der Wirkrichtung des Vorspannruckes verbunden sind, und dass ein Tasttisch vorgesehen ist, der hängend entgegen eines an der Hauptplatte angreifenden Spannmittels in einem definierten Tastabstand gewichtskompensiert von der Hauptplatte gehalten ist, dem ein Sensor zugeordnet ist, der bei Änderung des Tastabstandes ein Signal an den Rechner zum Sofortstopp der Presse zum Schutz des Werkzeugoberteils weiterleitet.

Von besonderer Bedeutung ist, dass der Tasttisch, die Hauptplatte, die Mittelabstützung, der Hauptzylinder und die Stellmutter die Presskraft in das Kopfstück der Presse kraft- und/oder formschlüssig in Abhängigkeit des Bewegungsablaufs von Ringzackenkolben, Ringzackenbolzen und Tastkolben zwischen OT und UT ableitet.

Nach einer besonders vorteilhaften Ausführungsform der erfindungsgemäßen Vorrichtung ist der zweite dem Ringzackenkolben zugeordnete Druckraum unterhalb eines zur Hubachse hin vorspringenden Stützabsatzes an der Wand des Hauptzylinders in Richtung der unteren Kolbenfläche des Ringzackenkolbens ausgebildet.
Dem Tastkolben ist zugleich ein Druckraum zugordnet, der unterhalb eines am Tastkolben vorgesehenen Bundes und oberhalb eines zur Hubachse hin vorspringenden Stützabsatzes an der Wand des Hauptzylinders ausgebildet ist.
Durch diese Ausbildung ist in einfacher Weise sichergestellt, dass entgegen dem auf den Ringzackenkolben wirkenden Vorspanndruck P1 ein Tastkolbendruck P2 auf den Ringzackenkolben und ein Differenzialdruck P3 auf den Tastkolben wirken kann, wodurch eine axiale Verschiebung von Ringzackenkolben, Tastkolben und Ringzackenbolzen bewirkt wird.

Vorteilhaft ist ferner, dass der Druckraum des Ringzackenkolbens über einen Anschluss im Ringzackendeckel an eine Druckleitung des Hydrauliksystems angeschlossen ist, die diesen Druckraum über ein Proportionalventil mit Vorspanndruck zum Erzeugen der Ringzackenkraft oder einen Abstreifdruck zum Erzeugen einer Abstreifkraft beaufschlagt oder bewegungslos schaltet.

Bevorzugt ist zudem vorgesehen, dass der zweite Druckraum des Ringzackenkolbens und zugleich der Druckraum für den Tastkolben über einen Anschluss am Ringzackendeckel und ein Wegeventil zur Zuschaltung des Druckes im zweiten Druckraum durch eine Zuleitung mit der Druckleitung des Hydrauliksystems verbunden ist.

Nach einer weiteren Ausgestaltung der erfindungsgemäßen Vorrichtung sind die in die Druckräume führenden Kanäle in der Wand des Hauptzylinders axial in Richtung Hubachse angeordnet und münden jeweils unter Abbiegung in die entsprechenden Druckräume.

Des Weiteren ist zum Zwecke der Zuführung unterschiedlicher Mengen an Hydraulikflüssigkeit in die einzelnen Druckräume vorgesehen, dass der Kanal für den Ringzackenkolben gegenüber dem Kanal für den Tastkolben einen größeren Durchmesser aufweist.

In einer besonders vorteilhaften Ausgestaltung der erfindungsgemäßen Vorrichtung umfasst das Spannmittel eine Druckfeder und eine Spannschraube mit Außengewinde, die in einer Ausnehmung der Hauptplatte angeordnet sind, wobei die Spannschraube die Hauptplatte durchgreift und die Druckfeder zur Gewichtsaufhebung des Tasttisches und des Werkzeugoberteiles dient.

Eine weitere vorteilhafte Ausführungsform der erfindungsgemäßen Vorrichtung sieht vor, dass in einer Aufnahme der Hauptplatte der Sensor justierbar angeordnet ist, dessen Messpunkt durch eine im Tasttisch angeordnete Schaltfahne gegeben ist, wodurch eine exakte Abstimmung des Tastabstandes mit dem Spaltabstand gewährleistet ist. Der Spaltabstand dient bei einem Sofortstopp der Presse in vorteilhafterweise dazu, die kinetische Bewegungsenergie noch vor Stillstand der Presse abzubauen.

Bevorzugt ist des Weiteren vorgesehen, dass die Hauptplatte an einer stößelzugewandten Stirnwand des Hauptzylinders durch Schraubmittel befestigt ist.

In weiterer bevorzugter Ausgestaltung der erfindungsgemäßen Vorrichtung ist der Tasttisch mit der Hauptplatte durch achsparallel zur Hubachse in Bohrungen geführte Führungsbolzen verdrehsicher und axial verschiebbar angeordnet.

Eine besonders vorteilhafte Ausgestaltung der erfindungsgemäßen Vorrichtung besteht darin, dass die Ringzackenbolzen und die Ringzackendruckplatte koaxial zur Hubachse angeordnet sind, wobei die Druckplatte von einem Haltering am Tasttisch fixiert und eine Mittelabstützung in der Hauptplatte integriert ist.

Die Aufgabe der Erfindung wird des Weiteren durch das Verfahren dadurch gelöst, dass die Presskraft über ein kraft- und/oder formschlüssiges Verbinden mittels hydraulischer Ver- und Entriegelung von einem Tasttisch, einer Hauptplatte, Mittelabstützung, einem Hauptzylinder und einer Stellmutter in das Kopfstück der Presse sowie ein axiales Verschieben von Ringzackenkolben und Tastkolben in Flucht der Hubachse (HU) vor Einleiten der Presskraft bis zum Erreichen eines Kraft- und/ oder Formschlusses zwischen Ringzackendruckplatte, Ringzackenbolzen, Tastkolben und Ringzackenkolben, wobei zwischen Tastkolben und Ringzackenbolzen mit hydraulischen Mitteln ein Spaltabstand und zwischen Hauptplatte und Tasttisch mit mechanischen Mitteln ein auf den Spaltabstand abgestimmter gewichtskompensierter Tastabstand eingestellt wird, dessen Änderung durch die Ringzackendruckplatte und/oder Tasttisch in einem Leerhub abgefühlt und mit einem ein Signal ausgebenden Sensor detektiert und an den Rechner zum Auslösen eines Sofortstopps der Presse weitergeleitet wird. Die kinetische Bewegungsenergie wird im Spaltabstand zwischen Tasttisch und Ringzackenbolzen dadurch abgebaut, dass der Tasttisch in Richtung Ringzackenbolzen verfahren kann.

Das erfindungsgemäße Verfahren läuft insbesondere in folgenden bevorzugten Schritten ab:
a Vorspannen von Ringzackenkolben und Tastkolben auf einen Vorspannspanndruck P1 zum Herstellen ihres Kraftschlusses untereinander,
b permanentes Beaufschlagen des Tastkolbens mit einen vom Vorspanndruck P1 unterschiedlichen Differenzialdruck P3 zum axialen Verschieben des Tastkolbens,
c Halten eines auf einen Spaltabstand zwischen Tastkolben und Ringzackenbolzen abgestimmten Tastabstandes TA durch den auf dem Tastkolben lastenden Differenzialdruck P3 und den diesen entgegen wirkenden Vorspanndruck P1 zum Herstellen eines Kraftschlusses zwischen Tastkolben und Ringzackenkolben, wobei der Vorspanndruck P1, Tastkolbendruck P2 und Differenzialdruck P3 auf die Bedingung P1 » P3 und P2 = 0 eingestellt werden,
d Verdrängen der unter dem Differenzialduck P3 stehenden Hydraulikflüssigkeit aus dem zum Tastkolben gehörenden Druckraum durch den im oberen Druckraum anliegenden Vorspanndruck P1,
e Entlasten des Ringzackenkolbens durch Wegschalten des Vorspanndruckes P1 in OT zum Erreichen eines bewegungslosen Zustandes von Ringzackenkolben und Tastkolben,
f Abstreifen von Ringzackenkolben und Tastkolben durch Zuschalten eines Abstreifdruckes P4 und Tastkolbendruckes P2 mit einem konstanten Wert in die Druckräume von Ringzackenkolben und Tastkolben,
g Verschieben von Ringzackenkolben und Tastkolben bis zur Signalauslösung durch einen Sensor,
h Wegschalten des Abstreifdruckes P4 für den Ringzackenkolben und Tastkolben sowie Zuschalten des Vorspanndruckes P1 in den oberen Druckraum des Ringzackenkolbens,
i Wiederholen der Schrittfolgen a) bis h), sofern der Sensor keine stößelhubabhängige verfrühte Änderung des Tastabstandes TA detektiert hat.

In weiterer bevorzugter Ausgestaltung des erfindungsgemäßen Verfahrens ist vorgesehen, dass der Vorspanndruck für den Ringzackenkolben auf einen Hochdruck über 110 bar eingestellt wird.

Das erfindungsgemäße Verfahren sieht des Weiteren in bevorzugter Ausgestaltung vor, dass
- der Tastkolbendruck P2 und Abstreifdruck P4 auf einen Niederdruck unter 110 bar,
- der Differenzialdruck P3 auf einen Niederdruck unter 110 bar oder auf eingestellt wird.

Weitere Vorteile und Einzelheiten der Erfindung ergeben sich aus der nachfolgenden Beschreibung unter Bezugnahme auf die beigefügten Zeichnungen.

### Ausführungsbeispiel

Die Erfindung soll nachstehend an einem Ausführungsbeispiel näher erläutert werden.
Es zeigt

Fig. 1 eine perspektivische Darstellung der Presse mit im Kopfstück der Presse montierter erfindungsgemäßer Vorrichtung,

Fig. 2 einen Schnitt der erfindungsgemäßen Vorrichtung im ausgefahrenen Zustand,

Fig. 3 einen Schnitt der erfindungsgemäßen Vorrichtung eingefahrenen Zustand,

Fig. 4 einen Schnitt der Hauptplatte und des Tasttisches mit Darstellung der mechanischen Gewichtsaufhebung und

Fig. 5 eine auszugsweise Schnittansicht der Hauptplatte und des Tasttisches mit Darstellung der Anordnung des Sensors und der Lage von Spaltabstand und Tastabstand.

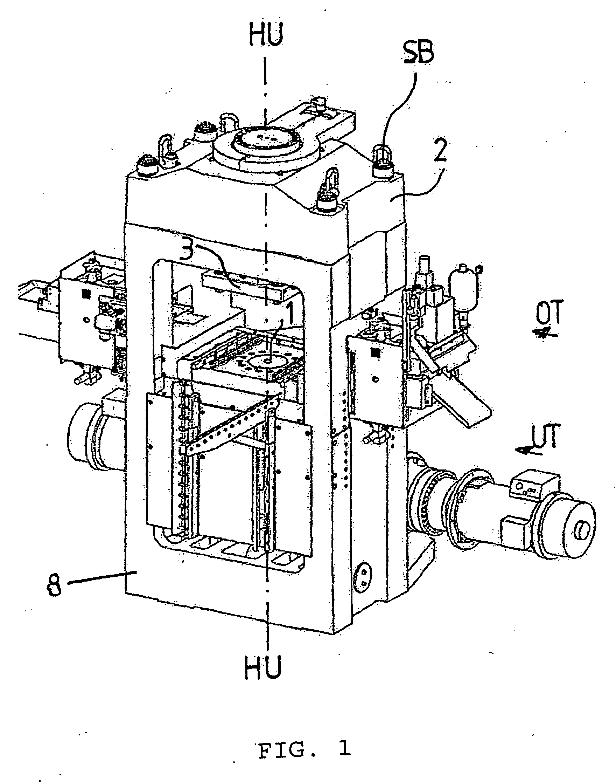

Die Fig. 1 zeigt in perspektivischer Darstellung eine mechanisch angetriebene Feinschneidpresse der Kniehebelbauart. Der eine Tischplatte tragende Stößel 1 dieser Presse führt eine Hubbewegung auf der Hubachse HU und in Richtung Kopfstück 2 der Presse aus. Im Kopfstück 2 der Presse ist die erfindungsgemäße Vorrichtung in Flucht zur Hubachse HU angeordnet.

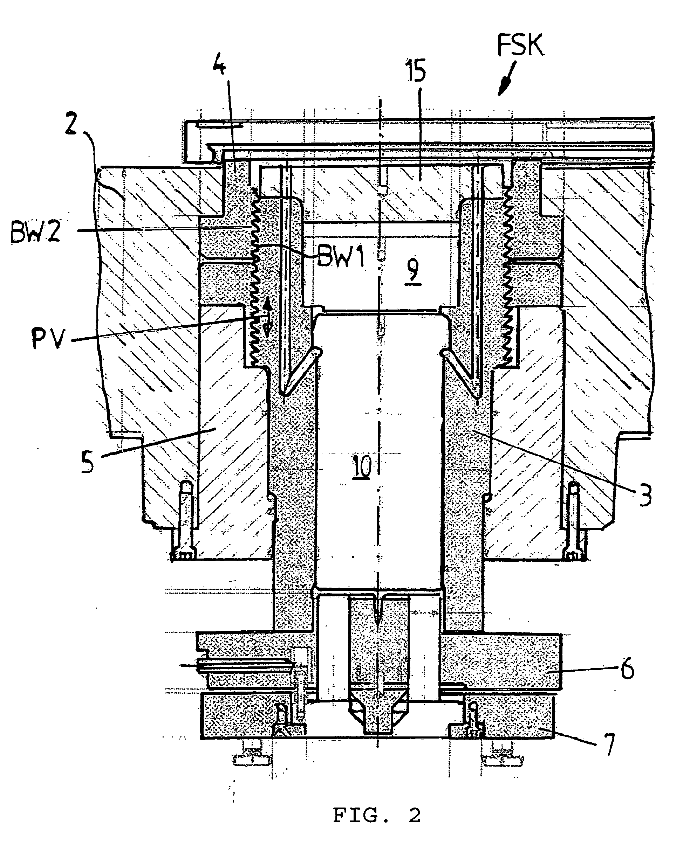

Die Fig. 2 zeigt die erfindungsgemäße Vorrichtung in Schnittdarstellung. Die erfindungsgemäße Vorrichtung ist als kompakte Baueinheit im Kopfstück 2 der Presse eingesetzt und dort form- und kraftschlüssig fixiert. Die erfindungsgemäße Vorrichtung umfasst einen Feinschneidkopf FSK, der im Wesentlichen aus einem Hauptzylinder 3, einer Stellmutter 4,
einem am Kopfstück 2 befestigten Flansch 5, einer Hauptplatte 6 und einem Tasttisch 7 gebildet ist. Hauptzylinder 3, Stellmutter 4, Flansch 5, Hauptplatte 6 und Tasttisch 7 bilden miteinander eine kraftschlüssige Anordnung, die die gesamte Presskraft in das Kopfstück 2 der Presse einleitet. Der Kraftschluss wird durch eine Verriegelung der Bewegungsgewinde BW1 und BW2 am Kopf des Hauptzylinders 3 und an der Stellmutter 6 erreicht, in dem das Bewegungsgewinde BW1 des Hauptzylinders 3 gegen das Bewegungsgewinde BW2 der Stellmutter 6 in Richtung oberen Totpunkt OT mit einem hydraulischen Druck PV gedrückt wird. Die Entriegelung der beiden Bewegungsgewinde BW1 und BW2 erfolgt durch Wegschalten des hydraulischen Druckes PV.
Der Kraftschluss ist durch die grau dargestellte Fläche in der Fig. 2 kenntlich gemacht.
Das Kopfstück 2 ist mit Spannschrauben SB mit dem Pressenständer 8 verbunden (siehe Fig. 1).

Im Hauptzylinder 3 sind ein Ringzackenkolben 9 und ein Tastkolben 10 axial zueinander fluchtend aufgenommen. Die Ringzackenbolzen 11 durchgreifen die Hauptplatte 6 und lagern auf einer Ringzackendruckplatte 12, die von einem am Tasttisch 7 befestigten Ringzackenhaltering 13 gesichert ist.
Der Hauptzylinder 3 ist kopfseitig mit einem Ringzackendeckel 15 druckdicht verschlossen und bildet oberhalb des Ringzackenkolbens 9 einen Druckraum 16, der über einen Anschluss 17 und ein steuerbares Ventil 18 durch eine Zuleitung 19 mit der Druckleitung 56 des Hydrauliksystems zum Aufbringen eines auf den Ringzackenkolben 9 in Richtung unterer Totpunkt UT wirkenden hydraulischen Vorspanndruckes P1 verbunden ist.

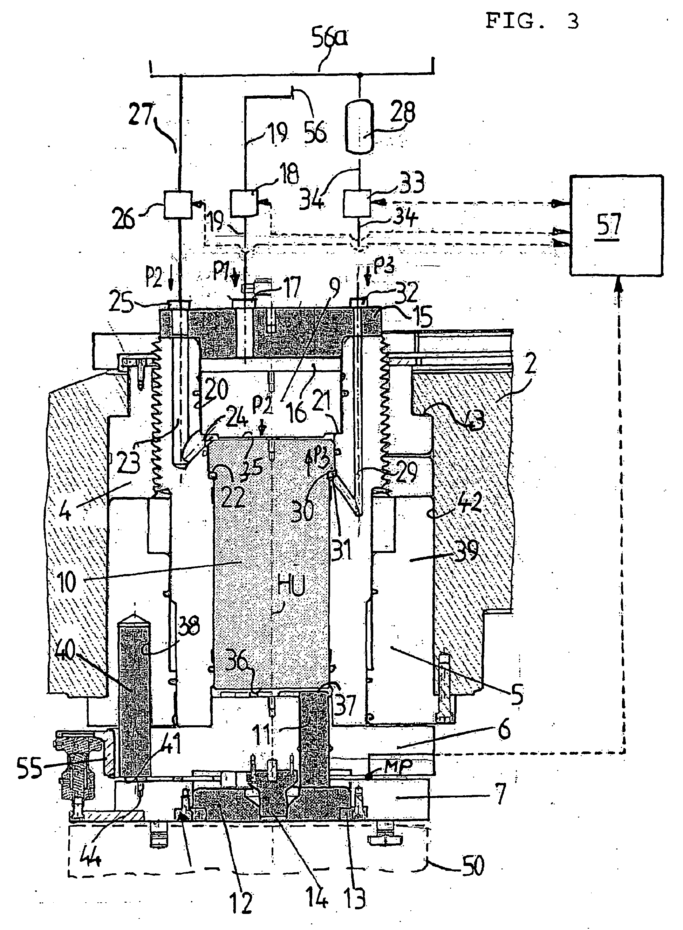

Der Hauptzylinder 3 weist - wie Fig. 3 zeigt an seiner Innenwand 20 einen ersten stufenartig in Richtung Hubachse HU vorspringenden Absatz 21 zur Abstützung und Begrenzung der Hubbewegung des Ringzackenkolbens 9 in Richtung unteren Totpunkt UT auf. Unterhalb dieses ersten Absatzes 21 ist ein zweiter in Richtung Hubachse HU vorspringender Absatz 22 angeordnet, der den Druckraum 31 des Tastkolbens 10 begrenzt.
In der Wand 20 des Hauptzylinders 3 befindet sich ein axial verlaufender Kanal 23, der unter Umlenkung von etwa 45° in Richtung Hubachse HU unterhalb des ersten Absatzes 21 aus der Innenwand 20 austritt. Es entsteht unterhalb des Ringzackenkolbens 9 ein Druckraum 24, in den das unter einen Tastkolbendruck P2 stehendes Hydraulikmedium befördert wird. Der Kanal 23 ist dazu mit einem Anschluss 25 am Ringzackendeckel 15 verbunden, der über ein steuerbares Ventil 26 und eine entsprechende Zuleitung 27 angeschlossen ist, der seinerseits mit der Niederdruckleitung 56a des Hydrauliksystems verbunden ist.
Weiterhin ist in der Wand 20 des Hauptzylinders 3 ein axial verlaufender Kanal 29 vorgesehen, der unter Umlenkung von etwa 45° in Richtung Hubachse HU unterhalb des zweiten an der Innenwand 20 ausgebildeten Absatzes 22 aus der Innenwand 20 austritt und unterhalb eines Bundes 30 des Tastkolbens 10 einen Druckraum 31 ausbildet. Der Kanal 29 ist am Ringzackendeckel 15 mit einem Anschluss 32 verbunden, der an ein steuerbares Ventil 33 über eine Zuleitung 34 und Speicher 28 mit dem Hydrauliksystem angeschlossen ist. Der Druckraum 31 wird mit
einem Differenzialdruck P3 durch das hydraulische Fluid in Richtung oberen Totpunkt OT beaufschlagt, so dass der Tastkolben 9 bestrebt ist, eine Bewegung in Richtung oberen Totpunkt OT auszuführen.
Die Drücke P2 und P3 wirken dem Vorspanndruck P1 entgegen, wobei der Druck P3 dazu führt, dass sich der Tastkolben 10 an die Unterseite 35 des Ringzackenkolbens 9 kraftschlüssig anlegen kann.

Zwischen der Unterseite 36 des Tastkolbens 10 und der Stirnseite 37 der Ringzackenbolzen 11 ist ein definierter Spaltabstand SP vorgesehen, der beispielsweise 4 bis 10 mm, vorzugsweise 6 mm, betragen kann.
Der Spaltabstand SP ermöglicht einen genügend großen Halteweg, welcher bei einem Sofortstopp der Presse benötigt wird, um die kinetische Bewegungsenergie abzubremsen oder zu verzögern.
Die Ringzackenbolzen 11 lagern auf der Ringzackendruckplatte 11 kraft-und/oder formschlüssig, so dass eine hydraulische Verdrängung in Abhängigkeit des Tasthubes und des Druckes P3 gegen den Druck P1 erfolgen kann. Die gesamte durch den Vorspanndruck P1 erzeugte Ringzackenkraft ist dann um die vom Differenzialdruck P3 erzeugte Kraft reduziert.

Das Kopfstück 2 besitzt an seiner der Hubachse HU zugewandten Innenwand 42 einen in Richtung Hubachse HU vorspringenden stufenartigen oberen Absatz 43, an der sich die Stellmutter 4 anlehnt und axial in Richtung oberen Totpunkt OT gesichert ist. Die Stellmutter 6 wird durch den rohrartigen Teil 39 des Flansches 5 axial in Richtung unteren Totpunkt UT gehalten.

Im Flansch 5 sind zwei diametral gegenüberliegende Bohrungen 38 vorgesehen, die parallel zur Hubachse HU in den rohrartigen Teil 39 eingebracht sind.
Diese Bohrungen 38 dienen zur Aufnahme von bolzenartigen Fiihrungsbolzen 40, die die Hauptplatte 6 axial führen und als Verdrehsicherung für die Hauptplatte 6 und den Hauptzylinder 3 dienen.

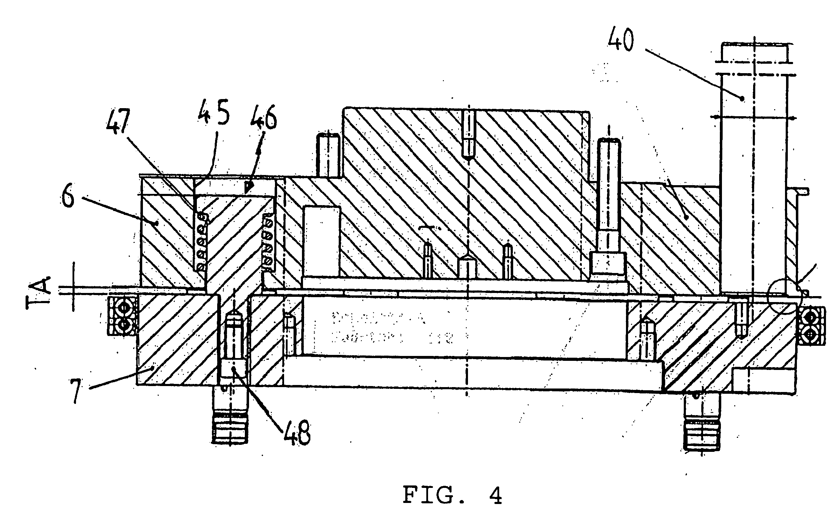

Wie Fig. 4 zeigt, befindet sich in der Hauptplatte 6 eine Ausnehmung 45 für die Aufnahme eines Spannmittels 46, das sich aus einer Druckfeder 47 und einer Justierschraube 48 zusammensetzt. Das Spannmittel 46 ermöglicht, den Tasttisch 7 und das Werkzeugoberteil 50 auf gewichtskompensiert zu halten. Anders ausgedrückt, es erfolgt eine Gewichtsaufhebung des Tasttisches 7 und des Werkzeugoberteils 50. An der Unterseite 49 des Tasttisches 7 befinden sich übliche Spannelemente zum Befestigen des oberen Werkzeugteils 50, so dass darauf nicht weiter eingegangen zu werden braucht.

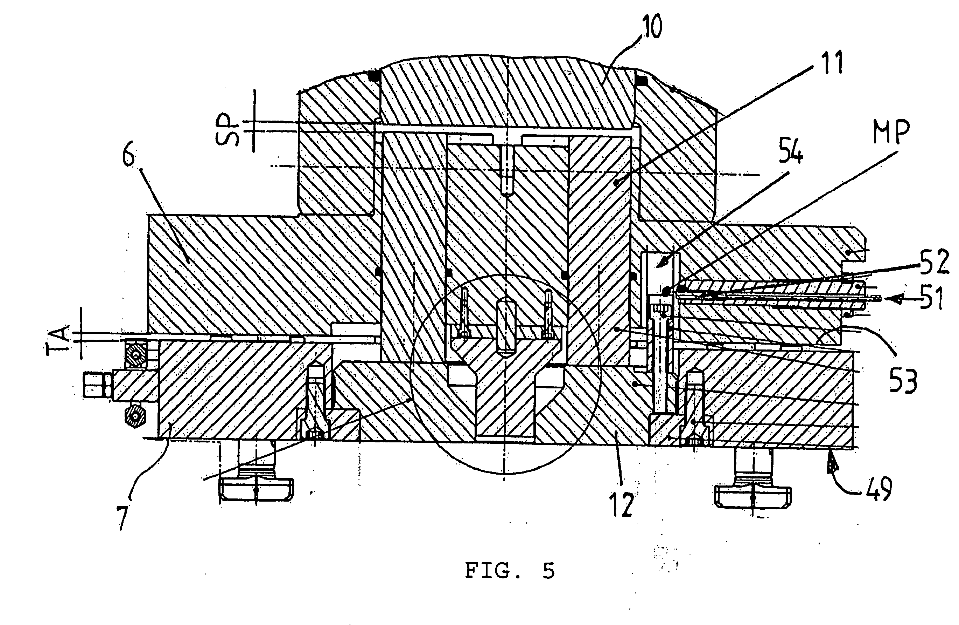

Die Fig. 5 zeigt eine Detailansicht der Hauptplatte 6 und des Tasttisches 7 im Schnitt. In die Hauptplatte 6 ist eine senkrecht zur Hubachse HU gelegene Ausnehmung 51 eingebracht, in der ein Sensor 52 zum Erfassen des Tastabstandes TA angeordnet ist. Der Messpunkt MP des Sensors 52 endet in einer parallel zur Hubachse HU von der Unterseite 53 der Hauptplatte 6 zugänglichen Ausnehmung 54 für den Messpunkt MP des Sensors 52.
Über den Sensor 52 wird die Einstellung auf den zu detektierenden Tastabstand TA exakt abgestimmt.

Die Fig. 5 verdeutlicht auch die Lage des Spaltabstandes SP zwischen der Unterseite des Tastkolbens 10 und der Stirnseite der Ringzackenbolzen 11 einerseits und des Tastabstandes TA zwischen der Unterseite 53 der Hauptplatte 6 und der Oberseite des Tasltisches 7 andererseits.

Das Hydrauliksystem besteht - wie Fig. 3 zeigt- aus einer Druckleitung 56, die von einer nicht dargestellten Druckquelle auf einen Druck von 250 bar gespannt ist. An diese Druckleitung 56 ist die Zuleitung 19 angeschlossen, die über das steuerbare Proportionalventil 18 zum oberhalb des Ringzackenkolbens 9 liegenden Druckraum 16 führt. Über das Proportionalventil 18 wird der hydraulische Vorspanndruck P1 zugeführt, der in Richtung unterer Totpunkt TU auf den Ringzackenkolben 9 zur Erzeugung der Ringzackenkraft wirkt. Der Vorspanndruck P1 kann auf Drücke zwischen 20 und 250 bar eingestellt werden.
Von einer Niederdruckleitung 56a führt eine Zuleitung 27 über das steuerbare Wegeventil 26 in den Druckraum 24, welcher als Abstreifdruck P4 für den Tastkolben 10 wirkt. Der Tastkolbendruck P2 wird direkt vom Hydrauliksystem zur Verfügung gestellt.
Eine weitere Zuleitung 34 führt von der Niederdruckleitung 56a über einen Speicher 28 in den Druckraum 31 unterhalb des Tastkolbens 10. Der Differenzialdruck P3 wirkt dem Vorspanndruck P1 entgegen und ermöglicht es, Tastkolben 10 und Ringzackenkolben 9 in Kraftschluss zu bringen, zu halten aber auch den Kraftschluss wieder zu lösen, in dem das Ventil 33 zugeschaltet wird. Zudem kann so das Druckpotenzial des Speichers 28 entleert werden.

Das erfindungsgemäße Verfahren wird nachfolgend näher erläutert.
Der Vorspanndruck P1, der die Ringzackenkraft darstellt, wird durch das kraft- und/oder formschlüssige Verbinden von Tastkolben 10, Ringzackenkolben 9 und Ringzackenbolzen 11 abgeleitet. Vor Einleiten des Vorspanndruckes P1 erfolgt bis zum Erreichen des Kraftschlusses von Ringzackenkolben 9 und Tastkolben 10 ein axiales Verschieben letzterer in Flucht der Hubachse HU durch den anstehenden Differenzialdruck P3. Dadurch wird ein Kraftschluss zwischen der Unterseite des Tastkolbens 10 und der Stirnseite des Ringzackenkolbens 11 hergestellt. Zwischen dem Tastkolben 10 und den Ringzackenbolzen 11 ist ein fixer Spaltabstand SP realisiert, der beispielsweise 6 mm beträgt.
Der Tasttisch 7 ist an der Hauptplatte 6 hängend gewichtskompensiert angeordnet, wobei für seine axiale Verschiebung vier Führungsbolzen 40 und für die Gewichtskompensation vier mechanische Spannmittel 46 vorgesehen sind.
Ein Sensor 52, der dem Tastabstand TA zugeordnet ist, erfasst eine stößelhubabhängige verfrühte Änderung des Tastabstandes TA und erzeugt ein Signal, das einem Rechner 57 zugeführt wird, der die Signale verarbeitet.
Es wird zwischen zwei Signalzuständen unterschieden. Das ordnungsgemäße Herstellen des Formschlusses zwischen Ringzackendruckplatte 12, Ringzackendruckbolzen 11, Tastkolben 10 und Ringzackenkolben 9 bewirkt eine Verdrängung gegen den Vorspanndruck P1. d.h. es erfolgt eine ordentliche Aufhebung des Tasthubes, d.h. der Tasttisch 7 und Ringzackendruckplatte 12 setzen auf die Hauptplatte 6 auf, ohne dass eine Änderung des Tastabstandes TA festgestellt werden konnte. Die einzelnen Verfahrensschritte des erfindungsgemäßen Verfahrens laufen ununterbrochen ab.
Wird der Tastabstand TA, beispielsweise durch Butzen oder andere Fremdkörper verändert, detektiert der Sensor 52 diese Änderung und gibt diese Information an den Rechner 57 zur weiteren Verarbeitung weiter. Die Änderung des Tastabstandes TA führt zu einer verfrühten Aufhebung des Tasthubes, so dass der Rechner 57 einen Sofortstopp der Presse veranlasst. Die kinetische Bewegungsenergie beim Sofortstopp wird über den genügend hohen Tastabstand über den Antrieb abgebremst oder verzögert.

Im Verfahrensschritt a) wird der Ringzackenkolben 9 und Tastkolben 10 auf einen Hochdruck P1 vorgespannt.

Der auf den Tastabstand TA abgestimmte Spaltabstand SP von Tastkolben 10 und Ringzackenbolzen 11 wird im Schritt b) durch den resultierenden Differenzialdruck P3 gehalten, wobei sich ein Kraftschluss zwischen Tastkolben 10 und Ringzackenkolben 9 einstellt.
Der Differenzialdruck P3 wurde beispielsweise auf 65 bar eingestellt.

Der Verfahrensschritt c) sieht vor, dass der unter Differenzialdruck P3 stehende Tastkolben 10, Ringzackenbolzen 11, Ringzackendruckplatte 12 und der unter Vorspanndruck P1 stehende Ringzackenkolben 9 durch den Stößel 1 verdrängt wird.

Der Ringzackenkolben 11 wird dann im Schritt d) durch Wegschalten des Vorspanndruckes P1 im oberen Totpunkt OT entlastet.

Nach Verfahrensschritt e) wird der Tastkolben 10 mit einem Differenzialdruck P3 von beispielsweise 65 bar beaufschlagt, der die Herstellung oder Aufhebung des Kraftschlusses zwischen Tastkolben 10 und Ringzackenkolben 9 durch eine axiale Verschiebung des Tastkolbens 10 ermöglicht.

Im Schritt f) wird der Ringzackenkolben 9 und der
Tastkolben 10 abgestreift und ein vorwählbarer Abstreifdruck P4 von beispielsweise 70 bar im zum oberen Ringzackenkolben 9 gehörenden Druckraum 16 bei anliegendem Differenzialdruck P3 mit dem Ventil 18 eingestellt.
Gleichzeitig zum Abstreifdruck P4 wird der Tastkolbendruck P2 von beispielsweise 65 bar zugeschaltet.

Der Abstreifdruck P4 wird sodann im Schritt g) weggeschaltet und der Druck P1 auf den oberen Druckraum 16 des Ringzackenkolbens 9 zugeschaltet, wenn über den Tastkolben 10, Ringzackenbolzen 11 und Ringzackendruckplatte 12 die Signalgabe des Sensors 52 zum Erreichen des Spaltabstandes SP erfolgt ist.

Es folgt das Wiederholen der Schrittfolgen a) bis g).

Wird diese Schließbewegung durch eine verfrühte Änderung des detektierbaren Tastabstandes TA ausgelöst, erfolgt eine Schnellabschaltung, d.h. ein Sofortstopp der Presse. Eine verfrühte Schließbewegung wird immer dann ausgelöst, sobald sich Stanzabfälle, Teile oder sonstige Fremdkörper im oberen Werkzeug befinden, weil dies zu einer verfrühten Änderung des Tastabstandes TA führt.

### [0053] Bezugszeichenliste

- Stößel: 1
- Kopfstück der Presse: 2
- Hauptzylinder: 3
- Stellmutter: 4
- Flansch: 5
- Hauptplatte: 6
- Tasttisch: 7
- Pressenständer: 8
- Ringzackenkolben: 9
- Tastkolben: 10
- Ringzackenbolzen: 11
- Ringzackendruckplatte: 12
- Ringzackenhaltering: 13
- Mittelabstützung: 14
- Ringzackendeckel: 15
- Oberer Druckraum für 9: 16
- Anschluss in 15: 17
- Proportionalventil: 18
- Zuleitung für 16: 19
- Innenwand von 3: 20
- Erster vorspringender Absatz: 21
- Zweiter vorspringender Absatz: 22
- Kanal für 24: 23
- Unterer Druckraum von 9: 24
- Anschluss für 24 in 15: 25
- Steuerbares Ventil in 27: 26
- Zuleitung für 24: 27
- Speicher für 24: 28
- Kanal: 29
- Bund im Tastkolben 10: 30
- Druckraum für Tastkolben 10: 31
- Anschluss für 31: 32
- Steuerbares Ventil für 34: 33
- Zuleitung für 31: 34
- Unterseite des Ringzackenkolbens 9: 35
- Unterseite des Tastkolbens 10: 36
- Stirnseite des Ringzackenbolzens 11: 37
- Bohrungen: 38
- Rohrartiger Teil von 5: 39
- Führungsbolzen: 40
- Stirnseite von 40: 41
- Innenwand von 2: 42
- Absatz an 2: 43
- Schraubverbindung: 44
- Ausnehmung in Hauptplatte 6: 45
- Spannmittel: 46
- Druckfeder: 47
- Justierschraube: 48
- Unterseite des Tasttisches: 49
- Oberes Werkzeugteil: 50
- Ausnehmung: 51
- Sensor: 52
- Unterseite der Hauptplatte: 53
- Axiale Ausnehmung in 6: 54
- Anschläge: 55
- Hochdruckleitung des Hydrauliksystems: 56
- Niederdruckleitung des Hydrauliksystems: 56a
- Rechner: 57
- Bewegungsgewinde am Hauptzylinder 3: BW1
- Bewegungsgewinde an der Stellmutter 6: BW2
- Feinschneidkopf: FSK
- Hubachse von 1: HU
- Messpunkt von 52: MP
- Oberer Totpunkt: OT
- Vorspanndruck: P1
- Tastkolbendruck: P2
- Differenzialdruck: P3
- Abstreifdruck: P4
- Ver- oder Entriegelungsdruck: PV
- Spaltabstand: SP
- Tastabstand: TA
- Unterer Totpunkt: UT

## Patentansprüche

1. Vorrichtung zum Verhindern des Bruchs eines aus einem Ober- und Unterteil zusammengesetzten Werkzeugs beim Feinschneiden und/oder Umformen in einer Presse mit einem oberhalb eines eine Hubbewegung ausführenden Stößel (1) angeordneten Feinschneidkopfes (FSK), der ein Hauptzylinder (3) umfasst, in dem ein auf der Hubachse (HU) liegender Ringzackenkolben (9) und mehrere koaxial zur Hubachse (HU) angeordnete Ringzackenbolzen (11) aufgenommen sind, die in einer den Hauptzylinder (3) verschließenden Hauptplatte (6) axial geführt sind und sich auf einer Ringzackendruckplatte (12) abstützen, wobei der Hauptzylinder (3) im Kopfstück (2) der Presse gehalten und durch einen Ringzackendeckel (15) druckdicht verschlossen ist, und wobei der Feinschneidkopf (FSK) mit einem Hydrauliksystem zum Erzeugen von auf das Werkzeug wirkende Drücke über durch einen Rechner (57) ansteuerbare Ventile (18,26,33) in Verbindung steht, **dadurch gekennzeichnet, dass** zwischen Ringzackenkolben (9) und Ringzackenbolzen (11) ein Tastkolben (10) vorgesehen ist, der mit dem Ringzackenkolben (9) einerseits und mit Ringzackenbolzen (11) und Ringzackendruckplatte (12) andererseits eine axial zueinander verschiebbare Anordnung bildet, wobei dem Ringzackenkolben (9) ein mit einem Vorspanndruck (P1) des Hydrauliksystems beaufschlagbarer Druckraum (16), zwischen Ringzackenkolben (9) und Tastkolben (10) ein mit einem Tastkolbendruck (P2) beaufschlagbarer Druckraum (24) sowie dem Tastkolben (10) ein weiterer mit einem Differenzialdruck (P3) beaufschlagbarer Druckraum (31) zugeordnet sind, von denen die Druckräume (16, 24, 31) über je einen Anschluss (17,25,32)) im Ringzackendeckel (15) und die Druckräume (24,31) jeweils über separate im Hauptzylinder (3) angeordnete Kanäle (23,29) mit dem Hydrauliksystem zur Beaufschlagung des Ringzackenkolbens (9) und des Tastkolbens (10) entgegen der Wirkrichtung des Vorspannruckes (P1) verbunden sind, und dass ein Tasttisch (7) vorgesehen ist, der hängend entgegen eines an der Hauptplatte (6) angreifenden Spannmittels (46) in einem definierten Tastabstand (TA) gewichtskompensiert von der Hauptplatte (6) gehalten ist, welchem Tastabstand (TA) ein Sensor (52) zugeordnet ist, der bei Änderung des Tastabstandes (TA) ein Signal an den Rechner (57) zum Sofortstopp der Presse zum Schutz des Werkzeugoberteils (50) weiterleitet.

2. Vorrichtung nach Anspruch 1, **dadurch gekennzeichnet, dass** der dem Ringzackenkolben (9) zugeordnete Druckraum (24) unterhalb eines zur Hubachse (HU) hin vorspringenden Stützabsatzes (21) an der Wand (20) des Hauptzylinders (3) in Richtung der unteren Kolbenfläche (35) des Ringzackenkolbens (9) ausgebildet ist.

3. Vorrichtung nach Anspruch 1, **dadurch gekennzeichnet, dass** der dem Tastkolben (10) zugeordnete Druckraum (31) unterhalb eines am Tastkolben (10) vorgesehenen Bundes (30) und oberhalb eines zur Hubachse (HU) vorspringenden Stützabsatzes (22) an der Wand (20) des Hauptzylinders (3) ausgebildet ist.

4. Vorrichtung nach Anspruch 1 bis 3, **dadurch gekennzeichnet, dass** der Druckraum (16) für den Ringzackenkolben (9) über den Anschluss (17) am Ringzackendeckel (15) an eine Zuleitung (19) einer Hochdruckleitung (56) des Hydrauliksystems angeschlossen ist, wobei ein in der Zuleitung (19) gelegenes Proportionalventil (18) der Druckraum (16) mit Vorspanndruck (P1) zum Erzeugen der Ringzackenkraft oder einen Druck zum Erzeugen einer Abstreifdruckes (P4) beaufschlagbar oder bewegungslos schaltbar ist.

5. Vorrichtung nach Anspruch 1 bis 3, **dadurch gekennzeichnet, dass** der Druckraum (24) für den Ringzackenkolben (9) und Tastkolben (10) über den Anschluss (25) am Ringzackendeckel (15) und ein Wegeventil (26) zum Zuschalten des Tastkolbendruckes (P2) im Druckraum (24) durch eine Zuleitung (27) mit einer Niederdruckleitung (56a) des Hydrauliksystems verbunden ist.

6. Vorrichtung nach Anspruch 1 bis 3, **dadurch gekennzeichnet, dass** der Druckraum (31) für den Tastkolben (10) über den Anschluss (32) am Ringzackendeckel (15) und ein Wegeventil (33) zum Zuschalten des Differenzialdruckes (P)3 im Druckraum (31) durch eine Zuleitung (34) mit der Niederdruckleitung (56a) des Hydrauliksystems verbunden ist.

7. Vorrichtung nach Anspruch 1 bis 3, **dadurch gekennzeichnet, dass** die in die Druckräume (24,31) führenden Kanäle (23,29) in der Wand (20) des Hauptzylinders (3) koaxial in Richtung Hubachse (HU) angeordnet sind und jeweils so unter Abbiegung in die Druckräume (24,31) münden, dass der Ringzackenkolben (9) und Tastkolben (10) entgegen der Wirkrichtung des Vorspanndruckes (P1) beaufschlagbar ist.

8. Vorrichtung nach Anspruch 1 bis 3 und 5, **dadurch gekennzeichnet, dass** der Kanal (23) für den Ringzackenkolben (9) und Tastkolben (10) gegenüber dem Kanal (29) für den Differenzialdruck (P3) an der Tastkolbenunterseite (22) einen größeren Durchmesser aufweist.

9. Vorrichtung nach Anspruch 1, **dadurch gekennzeichnet, dass** das Spannmittel (46) eine Druckfeder (47) mit Außengewinde umfasst, die in einer Ausnehmung (45) der Hauptplatte (6) angeordnet sind, wobei das Spannmittel (46) die Hauptplatte (6) durchgreift und über die Druckfeder (47) eine Gewichtskompensation des Tasttisches (7) und/oder des Werkzeugoberteils (50) einstellbar ist.

10. Vorrichtung nach Anspruch 1, **dadurch gekennzeichnet, dass** in einer Aufnahme (51) der Hauptplatte (6) der Sensor (52) angeordnet ist, dessen Messpunkt (MP) einstellbar ist.

11. Vorrichtung nach Anspruch 1, **dadurch gekennzeichnet, dass** die Hauptplatte (6) an einer stößelzugewandten Stirnwand des Hauptzylinders (3) durch Schraubmittel befestigt ist.

12. Vorrichtung nach Anspruch 1, **dadurch gekennzeichnet, dass** die Hauptplatte (6) durch achsparallele zur Hubachse (HU) in Bohrungen (38) geführte Führungsbolzen (40) verdrehsicher und axial verschiebbar angeordnet ist.

13. Vorrichtung nach Anspruch 1, **dadurch gekennzeichnet, dass** im Hauptzylinder (3) die Ringzackenbolzen (11) und Ringzackendruckplatte (12) koaxial zur Hubachse (HU) angeordnet sind, und dass in der Hauptplatte (6) eine Mittelabstützung (14) in Flucht der Hubachse (HU) vorgesehen ist, wobei die Druckplatte (12) von einem Haltering (13) am Tasttisch (7) gehalten ist.

14. Verfahren zum Verhindern des Bruchs eines aus einem Ober- und Teil eines Werkzeugs beim Feinschneiden und/oder Umformen in einer Presse mit einer Vorrichtung nach Anspruch 1, bei dem die im Hauptzylinder des Feinschneidkopfes geführten Ringzackenkolben und Tastkolben zum Aufbringen einer Ringzackenkraft und Abstreifkraft mit einem regelbaren Druck aus einem Hydrauliksystem beaufschlagt werden, wobei die einzelnen Drücke für die Kolben über durch einen Rechner angesteuerte Ventile eingestellt werden, **gekennzeichnet durch** ein Ableiten der Presskraft über ein kraft- und/oder formschlüssiges Verbinden mittels hydraulischer Ver- und Entriegelung von einem Tasttisch (7), einer Hauptplatte (6), Mittelabstützung (14), einem Hauptzylinder (3) und einer Stellmutter (6) in das Kopfstück (2) der Presse sowie ein axiales Verschieben von Ringzackenkolben (9) und Tastkolben (10) in Flucht der Hubachse (HU) vor Einleiten der Presskraft bis zum Erreichen eines Kraft- und/ oder Formschlusses zwischen Ringzackendruckplatte (12), Ringzackenbolzen (11), Tastkolben (10) und Ringzackenkolben (9), wobei zwischen Tastkolben und Ringzackenbolzen mit hydraulischen Mitteln ein Spaltabstand (SP) und zwischen Hauptplatte und Tasttisch mit mechanischen Mitteln ein auf den Spaltabstand (SP) abgestimmter gewichtskompensierter Tastabstand (TA) eingestellt wird,
dessen Änderung **durch** die Ringzackendruckplatte (12) und/oder Tasttisch (7) abgefühlt und mit einem ein Signal ausgebenden Sensor (52) detektiert und an den Rechner (57) zum Auslösen eines Sofortstopps der Presse weitergeleitet wird.

15. Verfahren nach Anspruch 14, **gekennzeichnet durch** folgende Schritte:
a Vorspannen von Ringzackenkolben und Tastkolben auf einen Vorspannspanndruck P1 zum Herstellen ihres Kraftschlusses untereinander,
b permanentes Beaufschlagen des Tastkolbens mit einen vom Vorspanndruck P1 unterschiedlichen Differenzialdruck P3 zum axialen Verschieben des Tastkolbens,
c Halten eines auf einen Spaltabstand zwischen Tastkolben und Ringzackenbolzen abgestimmten Tastabstandes TA **durch** den auf dem Tastkolben lastenden Differenzialdruck P3 und den diesen entgegen wirkenden Vorspanndruck P1 zum Herstellen eines Kraftschlusses zwischen Tastkolben und Ringzackenkolben, wobei der Vorspanndruck P1, Tastkolbendruck P2 und Differenzialdruck P3 auf die Bedingung P1 » P3 und P2 = 0 eingestellt werden,
d Verdrängen der unter dem Differenzialduck P3 stehenden Hydraulikflüssigkeit aus dem zum Tastkolben gehörenden Druckraum **durch** den im oberen Druckraum anliegenden Vorspanndruck P1,
e Entlasten des Ringzackenkolbens **durch** Wegschalten des Vorspanndruckes P1 in OT zum Erreichen eines bewegungslosen Zustandes von Ringzackenkolben und Tastkolben,
f Abstreifen von Ringzackenkolben und Tastkolben durch Zuschalten eines Abstreifdruckes P4 und Tastkolbendruckes P2 mit einem konstanten Wert in die Druckräume von Ringzackenkolben und Tastkolben,
g Verschieben von Ringzackenkolben und Tastkolben bis zur Signalauslösung **durch** einen Sensor,
h Wegschalten des Abstreifdruckes P4 für den Ringzackenkolben und Tastkolben sowie Zuschalten des Vorspanndruckes P1 in den oberen Druckraum des Ringzackenkolbens,
i Wiederholen der Schrittfolgen a) bis h), sofern der Sensor keine stößelhubabhängige verfrühte Änderung des Tastabstandes TA detektiert hat.

16. Verfahren nach Anspruch 14 und 15, **dadurch gekennzeichnet, dass** der Vorspanndruck (P1) auf einen Hochdruck über 110 bar eingestellt wird.

17. Verfahren nach Anspruch 14 und 15, **dadurch gekennzeichnet, dass** Tastkolbendruck (P2) und Abstreifdruck (P4) auf einen Niederdruck unter 110 bar und der Differenzialdruck (P3)) entweder auf einen Niederdruck unter 110 bar oder auf Null eingestellt werden.

18. Verfahren nach Anspruch 14 und 15, **dadurch gekennzeichnet, dass** der Tastkolbendruck (P2) und Differenzialdruck (P3) zu- und abschaltbar sind.

## Claims

1. Device for preventing a tool consisting of an upper and an lower part from breaking during fine blanking and/or forming in a press with a positioned above a ram (1) carrying out a stroke movement fine blanking head (FSK), which comprises a main cylinder (3) accommodating a V-shaped projection piston (9) lying on the stroke axis (HU) and several with regard to the stroke axis (HU) coaxially arranged V-shaped projection pins (11), which are axially guided in a main plate (6) covering the main cylinder(3) and supported on a V-shaped projection pressure plate (12), wherein the main cylinder (3) is hold in the head piece (2) of the press and pressure-tight closed by a V-shaped projection cover (15) and wherein the fine blanking head (FSK) is connected with a hydraulic system for producing pressure acting on the tool via valves (18, 26, 33), which are triggered by a computer (57), **characterized in that** between V-shaped projection piston (9) and V-shaped projection pins (11) is provided a touch piston (10), that with the V-shaped projection piston (9) on the one hand and with the V-shaped projection pins (11) and the V-shaped projection pressure plate (12) on the other hand develops an axially to each other movable arrangement, wherein the V-shaped projection piston (9) is allocated a pressure room (16) to which a preloading pressure (P1) of the hydraulic system can be admitted, between V-shaped projection piston (9) and touch piston (10) is allocated a pressure room (24) to which a touch piston pressure (P2) can be admitted and the touch piston (10) is allocated a further pressure room (31) to which can be admitted a differential pressure (P3), wherein the pressure rooms (16, 24, 31) each via one connection (17, 25, 32) in the V-shaped projection cover (15) and the pressure rooms (24, 31) respectively via separate positioned in the main cylinder (3) conduits (23, 29) are connected with the hydraulic system for admitting pressure to the V-shaped projection piston (9) and the touch piston (10) opposite to the effective direction of the preloading pressure (P1), and to provide a touch table (7) suspendedly hold against an applied to the main plate (6) fixing means (46) in a determined detection distance (TA) weight compensated by the main plate (6), to which detection distance (TA) is allocated a sensor (52) that in case of a change of the detection distance (TA) transmits a signal to the computer (57) to immediately stop the press to protect the upper part of the tool (50).

2. Device according to claim 1, **characterized in that** the pressure room (24) allocated to the V-shaped projection piston (9) is developed below a projecting in the direction of the stroke axis (HU) supporting shoulder (21) at the wall (20) of the main cylinder (3) in the direction of the lower piston surface (35) of the V-shaped projection piston (9).

3. Device according to claim 1, **characterized in that** the allocated to the touch piston (10) pressure room (31) is developed below a provided at the touch piston (10) shoulder (30) and above a projecting in the direction of the stroke axis (HU) supporting shoulder (22) at the wall (20) of the main cylinder (3).

4. Device according to claims 1 to 3, **characterized in that** the pressure room (16) for the V-shaped projection piston (9) via the connection (17) at the V-shaped projection cover (15) is connected to a feeding pipe (19) of a high-pressure pipe (56) of the hydraulic system, wherein via a proportional valve (18) positioned in the feeding line (19) to the pressure room (16) can be applied a preloading pressure (P1) for producing the V-shaped projection force or a pressure for producing a stripping pressure (P4) or it can be made motionless.

5. Device according to claims 1 to 3, **characterized in that** the pressure room (24) for the V-shaped projection piston (9) and the touch piston (10) via the connection (25) at the V-shaped projection cover (15) and a directional control valve (26) for admitting the touch piston pressure (P2) to the pressure room (24) is connected by a feeding pipe (27) with a low-pressure pipe (56a) of the hydraulic system.

6. Device according to claims 1 to 3, **characterized in that** the pressure room (31) for the touch piston (10) via the connection (32) at the V-shaped projection cover (15) and a directional control valve (33) for admitting the differential pressure (P3) to the pressure room (31) is connected by a feeding pipe (34) with the low-pressure pipe (56a) of the hydraulic system.

7. Device according to claims 1 to 3, **characterized in that** the leading to the pressure rooms (24, 31) conduits (23, 29) in the wall (20) of the main cylinder (3) are coaxially arranged in the direction to the stroke axis (HU) and open respectively bending into the pressure rooms (24, 31), so that to the V-shaped projection piston (9) and the touch piston (10) can be applied pressure against the effective direction of the preloading pressure (P1).

8. Device according to claims 1 to 3 and 5, **characterized in that** the conduit (23) for the V-shaped projection piston (9) and touch piston (10) with regard to the conduit (29) for the differential pressure (P3) at the lower side (22) of the touch piston has a bigger diameter.

9. Device according to claim 1, **characterized in that** the fixing means (46) comprises a pressure spring (47) with external thread arranged in a recess (45) of the main plate (6), wherein the fixing means (46) penetrates the main plate (6) and via the pressure spring (47) is adjustable a weight compensation of the touch table (7) and/or the upper part of the tool (50).

10. Device according to claim 1, **characterized in that** in a seat (51) of the main plate (6) is positioned the sensor (52), the measuring point (MP) of which is adjustable.

11. Device according to claim 1, **characterized in that** the main plate (6) is fixed by screwing means at a facing the ram frontal wall of the main cylinder (3).

12. Device according to claim 1, **characterized in that** the main plate (6) is torsion-proof and axially movable arranged by parallel to the stroke axis HU guided in holes (38) guiding pins (40).

13. Device according to claim 1, **characterized in that** in the main cylinder (3) the V-shaped projection pins (11) and the V-shaped projection pressure plate (12) are coaxially arranged with regard to the stroke axis (HU) and that in the main plate (6) is provided a central support (14) in alignment with the stroke axis (HU), wherein the pressure plate (12) is hold by a retaining ring (13) at the touch table (7).

14. Method for preventing a tool consisting of an upper and an lower part from breaking during fine blanking and/or forming in a press with a device according to claim 1, wherein the guided in the main cylinder of the fine blanking head V-shaped projection piston and touch piston for producing a V-shaped projection force and a stripping force are admitted to an adjustable pressure from a hydraulic system, wherein the single pressure values for the pistons are adjusted by valves triggered by a computer, **characterized by** diverting the pressure force by means of a non-positive and/or positive connection by hydraulic locking and unlocking of a touch table (7), a main plate (6), a central support (14), a main cylinder (3) and an adjusting nut (4) into the head piece (2) of the press and by axially shifting of V-shaped projection piston (9) and touch piston (10) in alignment with the stroke axis (HU) prior to feeding in the pressure force until the non-positive and/or positive connection between V-shaped projection pressure plate (12), V-shaped projection pins (11), touch piston (10) and V-shaped projection piston (9) is reached, wherein between touch piston and V-shaped projection pins with hydraulic means is adjusted a gap distance (SP) and between main plate and touch table with mechanical means is adjusted an adjusted to the gap distance (SP) weight compensated detection distance (TA), the change of which is scanned by the V-shaped pressure plate (12) and/or the touch table (7) and detected by a sensor (52) transmitting a signal to the computer (52) for causing the immediate stop of the press.

15. Method according to claim 14 **characterized by** the following steps:
a Preloading of V-shaped projection piston and touch piston to a preloading pressure (P1) to realize the non-positive connection between them
b Permanently applying a different from the preloading pressure (P1) differential pressure (P3) to the touch piston for axially shifting the touch piston,
c Maintaining a detection distance (TA) adjusted to a gap distance between touch piston and V-shaped projection pins by the applied to the touch piston differential pressure (P3) and the acting against it preloading pressure (P1) for realizing a non-positive connection between touch piston and V-shaped projection piston, wherein the preloading pressure (P1), the touch piston pressure (P2) and the differential pressure (P3) are adjusted to the condition P1 » P3 and P2 = 0,
d Superseding the hydraulic fluid being under differential pressure (P3) in the allocated to the touch piston pressure room by the applied to the upper pressure room preloading pressure (P1),
e Relieving the V-shaped projection piston by switching off the preloading pressure (P1) in the upper dead point for reaching a motionless state of V-shaped projection piston and touch piston,
f Stripping of V-shaped projection piston and touch piston by applying a stripping pressure (P4) and a touch piston pressure (P2) with a constant value to the pressure rooms of V-shaped projection piston and touch piston,
g Shifting the V-shaped projection piston and the touch piston until a sensor triggers a signal,
h Switching off the stripping pressure (P4) for the V-shaped projection piston and the touch piston and applying the preloading pressure (P1) to the upper pressure room of the V-shaped projection piston,
i Repeating the step sequence a) to h) in case the sensor has not detected a depending on the ram stroke premature change of the detection distance (TA).

16. Method according to claims 14 and 15, **characterized in that** the preloading pressure (P1) is adjusted to a high pressure of more than 110 bar.

17. Method according to claims 14 and 15, **characterized in that** the touch piston pressure (P2) and the stripping pressure (P4) are adjusted to a low pressure below 110 bar and the differential pressure (P3) is adjusted to a low pressure below 110 bar or to zero.

18. Method according to claims 14 and 15, **characterized in that** the touch piston pressure (P2) and the differential pressure (P3) can be switched on and switched off.

## Revendications

1. Dispositif destiné à empêcher la rupture d'un outil composé d'une partie supérieure et d'une partie inférieure lors du découpage fin et/ou du formage dans une presse avec une tête de découpage fin (FSK) disposée au-dessus d'un poussoir (1) effectuant un mouvement de course, laquelle tête comprend un cylindre principal (3) dans lequel sont logés un piston à dentelure annulaire (9) placé sur l'axe de déplacement (HU) et plusieurs boulons à dentelure annulaire (10) disposés coaxialement à l'axe de déplacement (HU), lesquels sont guidés axialement dans une plaque principale (6) obturant le cylindre principal (3) et prennent appui sur une plaque de pression à dentelure annulaire (12), le cylindre principal (3) étant fixé dans la pièce de tête (2) de la presse et étant fermé de manière étanche à la pression par un couvercle à dentelure annulaire (15), et la tête de découpage fin (FSK) communiquant avec un système hydraulique destiné à générer des pressions agissant sur l'outil par l'intermédiaire de vannes (18, 26, 33) aptes à être commandées par un ordinateur (57), **caractérisé en ce qu'**il est prévu, entre piston à dentelure annulaire (9) et boulons à dentelure annulaire (11), un piston palpeur (10) qui forme avec le piston à dentelure annulaire (9) d'une part et avec les boulons à dentelure annulaire (11) et la plaque de pression à dentelure annulaire (12) d'autre part un ensemble d'éléments déplaçables axialement l'un par rapport à l'autre, audit piston à dentelure annulaire (9) étant associés un compartiment de pression (16) pouvant être alimenté avec une pression de précontrainte (P1) du système hydraulique, un compartiment de pression (24) entre piston à dentelure annulaire (9) et piston palpeur (10), pouvant être alimenté avec une pression de piston palpeur (P2), et audit piston palpeur (10) étant associé un autre compartiment de pression (31) pouvant être alimenté avec une pression différentielle (P3), parmi lesquels les compartiments de pression (16, 24, 31), chacun via un raccordement (17, 25, 32) prévu dans le couvercle à dentelure annulaire (15), et les compartiments de pression (24, 31), chacun via un canal séparé (23, 29) disposé dans le cylindre principal (3), sont reliés au système hydraulique pour alimenter le piston à dentelure annulaire (9) et le piston palpeur (10) en sens inverse du sens d'action de la pression de précontrainte (P1), et **en ce qu'**il est prévu une table de palpage (7), maintenue suspendue avec compensation du poids, à l'encontre d'un moyen de serrage (46) exerçant son action sur la plaque principale (6), à une distance de palpage (TA) définie de la plaque principale (6), à laquelle distance de palpage (TA) est associé un capteur (52) qui, lorsque la distance de palpage (TA) change, transmet un signal à l'ordinateur (57) destiné à déclencher l'arrêt immédiat de la presse afin de protéger la partie supérieure (50) de l'outil.

2. Dispositif selon la revendication 1, **caractérisé en ce que** le compartiment de pression (24) associé au piston à dentelure annulaire (9) est réalisé au-dessous d'un épaulement d'appui (21) saillant vers l'axe de déplacement (HU), sur la paroi (20) du cylindre principal (3) en direction de la surface inférieure (35) du piston à dentelure annulaire (9).

3. Dispositif selon la revendication 1, **caractérisé en ce que** le compartiment de pression (31) associé au piston palpeur (10) est réalisé au-dessous d'une collerette (30) prévue sur le piston palpeur (10) et au-dessus d'un épaulement d'appui (22) saillant vers l'axe de déplacement (HU), sur la paroi (20) du cylindre principal (3).

4. Dispositif selon la revendication 1 à 3, **caractérisé en ce que** le compartiment de pression (16) pour le piston à dentelure annulaire (9) est relié à une conduite d'alimentation (19) d'une conduite haute pression (56) du système hydraulique, via le raccordement (17) prévu sur le couvercle à dentelure annulaire (15), une vanne proportionnelle (18) disposée dans la conduite d'alimentation (19) permettant d'alimenter le compartiment de pression (16) avec une pression de précontrainte (P1) pour générer l'effort de la dentelure annulaire ou avec une pression pour générer un effort de raclage (P4), ou d'immobiliser celui-ci.

5. Dispositif selon la revendication 1 à 3, **caractérisé en ce que** le compartiment de pression (24) pour le piston à dentelure annulaire (9) et le piston palpeur (10) est relié par une conduite d'alimentation (27) à une conduite basse pression (56a) du système hydraulique, via le raccordement (25) prévu sur le couvercle à dentelure annulaire (15) et un distributeur (26) destiné à connecter la pression de piston palpeur (P2) dans le compartiment de pression (24).

6. Dispositif selon la revendication 1 à 3, **caractérisé en ce que** le compartiment de pression (31) pour le piston palpeur (10) est relié par une conduite d'alimentation (34) à la conduite basse pression (56a) du système hydraulique, via le raccordement (32) prévu sur le couvercle à dentelure annulaire (15) et un distributeur (33) destiné à connecter la pression différentielle (P3) dans le compartiment de pression (31).

7. Dispositif selon la revendication 1 à 3, **caractérisé en ce que** les canaux (23, 29) conduisant dans les compartiments de pression (24, 31) sont disposés coaxialement en direction de l'axe de déplacement (HU) dans la paroi (20) du cylindre principal (3) et débouchent, chacun en fléchissant, dans lesdits compartiments de pression (24, 31) de façon à ce que le piston à dentelure annulaire (9) et le piston palpeur (10) puissent être alimentés en sens inverse du sens d'action de la pression de précontrainte (P1).

8. Dispositif selon la revendication 1 à 3 et 5, **caractérisé en ce que** le canal (23) pour le piston à dentelure annulaire (9) et le piston palpeur (10) présente à la face inférieure (22) du piston palpeur un plus grand diamètre par rapport au canal (29) pour la pression différentielle (P3).

9. Dispositif selon la revendication 1, **caractérisé en ce que** le moyen de serrage (46) comprend un ressort de pression (47) muni d'un filetage disposé dans un évidement (45) de la plaque principale (6), ledit moyen de serrage (46) traversant la plaque principale (6) et ledit ressort de pression (47) permettant de régler une compensation du poids de la table de palpage (7) et/ou de la partie supérieure (50) de l'outil.

10. Dispositif selon la revendication 1, **caractérisé en ce que** le capteur (52), dont le point de mesure (MP) est réglable, est disposé dans un logement (51) de la plaque principale (6).

11. Dispositif selon la revendication 1, **caractérisé en ce que** la plaque principale (6) est fixée par des moyens de vissage sur une paroi d'extrémité du cylindre principal (3) orientée vers le poussoir.

12. Dispositif selon la revendication 1, **caractérisé en ce que** la plaque principale (6) est agencée de façon solidaire en rotation et déplaçable axialement grâce à des boulons de guidage (40) parallèles à l'axe de déplacement (HU) guidés dans des alésages (38).

13. Dispositif selon la revendication 1, **caractérisé en ce que** les boulons à dentelure annulaire (11) et la plaque de pression à dentelure annulaire (12) sont disposés coaxialement à l'axe de déplacement (HU) dans le cylindre principal (3), et **en ce qu'**un support central (14) en alignement avec l'axe de déplacement (HU) est prévu dans la plaque principale (6), la plaque de pression (12) étant fixée sur la table de palpage (7) par une bague de retenue (13).

14. Procédé destiné à empêcher la rupture d'un outil composé d'une partie supérieure et d'une partie inférieure lors du découpage fin et/ou du formage dans une presse avec un dispositif selon la revendication 1, dans lequel le piston à dentelure annulaire et le piston palpeur guidés dans le cylindre principal, de la tête de découpage fin de manière à appliquer un effort de dentelure et un effort de raclage, sont alimentés avec une pression réglable provenant d'un système hydraulique, les différentes pressions pour les pistons étant réglées par l'intermédiaire de vannes commandées par un ordinateur, **caractérisé par** une évacuation de la force de compression dans la pièce de tête (2) de la presse, via une liaison par adhérence et/ou par complémentarité de formes au moyen d'un verrouillage et déverrouillage hydrauliques d'une table de palpage (7), d'une plaque principale (6), d'un support central (14), d'un cylindre principal (3) et d'un écrou de réglage (6), et un déplacement axial du piston à dentelure annulaire (9) et du piston palpeur (10) en alignement avec l'axe de déplacement (HU) avant introduction de la force de compression jusqu'à l'obtention d'une adhérence et/ou d'une complémentarité de formes entre plaque de pression à dentelure annulaire (12), boulons à dentelure annulaire (11), piston palpeur (10) et piston à dentelure annulaire (9), étant précisé que l'on règle entre piston palpeur et piston à dentelure annulaire, par des moyens hydrauliques, un intervalle d'espace (SP), et entre plaque principale et table de palpage, par des moyens mécaniques, un intervalle de palpage (TA) avec compensation du poids accordé avec l'intervalle d'espace (SP), dont la variation est palpée par la plaque de pression à dentelure annulaire (12) et/ou la table de palpage (7) et détectée avec un capteur (52) délivrant un signal puis transmise à l'ordinateur (57) afin de déclencher un arrêt immédiat de la presse.

15. Procédé selon la revendication 14, **caractérisé par** les étapes suivantes :
a précontraindre le piston à dentelure annulaire et le piston palpeur à une pression de précontrainte P1 de manière à établir leur adhérence entre eux,
b alimenter le piston palpeur en permanence avec une pression différentielle P3 différente de la pression de précontrainte P1 de manière à permettre le déplacement axial du piston palpeur,
c maintenir un intervalle de palpage TA accordé avec un intervalle d'espace entre piston palpeur et boulons à denture annulaire par la pression différentielle P3 appliquée sur le piston palpeur et la pression de précontrainte P1 agissant en sens contraire de celle-ci de manière à établir une adhérence entre piston palpeur et piston à denture annulaire, la pression de précontrainte P1, la pression de piston palpeur P2 et la pression différentielle P3 étant réglées selon la condition P1 » P3 et P2 = 0,
d chasser le liquide hydraulique soumis à la pression P3 hors du compartiment de pression associé au piston palpeur par la pression de précontrainte P1 régnant dans le compartiment de pression supérieur,
e détendre le piston à dentelure annulaire en déconnectant la pression de précontrainte P1 en OT de manière à obtenir un état immobile du piston à dentelure annulaire et du piston palpeur,
f racler le piston à dentelure annulaire et le piston palpeur en connectant une pression de raclage P4 et une pression de piston palpeur P2 d'une valeur constante dans les compartiments de pression du piston à dentelure annulaire et du piston palpeur,
g déplacer le piston à dentelure annulaire et le piston palpeur jusqu'au déclenchement du signal par un capteur,
h déconnecter la pression de raclage P4 pour le piston à dentelure annulaire et le piston palpeur et connecter la pression de précontrainte P1 dans le compartiment de pression supérieur du piston à dentelure annulaire,
i répéter les séquences d'étapes a) à h) si le capteur n'a pas détecté un changement prématuré dépendant de la course du poussoir de l'intervalle de palpage TA.

16. Procédé selon la revendication 14 et 15, **caractérisé en ce que** l'on règle la pression de précontrainte (P1) sur haute pression supérieure à 110 bar.

17. Procédé selon la revendication 14 et 15, **caractérisé en ce que** l'on règle la pression de piston palpeur (P2) et la pression de raclage (P4) sur basse pression inférieure à 110 bar et la pression différentielle (P3) soit sur basse pression inférieure à 110 bar, soit sur zéro.

18. Procédé selon la revendication 14 et 15, **caractérisé en ce que** la pression de piston palpeur (P2) et la pression différentielle (P3) sont connectables et déconnectables.
